# EUROPÄISCHE PATENTSCHRIFT

(11) **EP 0 704 611 B1**
(45) Veröffentlichungstag und Bekanntmachung des Hinweises auf die Patenterteilung: **17.09.1997**
(21) Anmeldenummer: 95107228.9
(22) Anmeldetag: 12.05.1995
(51) Int. Cl.: F02D 19/06, F02M 21/02, F02M 69/04

(54) **Kraftstoffzufuhr-Vorrichtung für flüssigen oder gasförmigen Kraftstoff**
Fuel feed apparatus for liquid or gaseous fuels
Dispositif d'alimentation de carburant liquide ou gazeux

(30) Priorität: 02.09.1994 DE 4431352
(43) Veröffentlichungstag der Anmeldung: 03.04.1996
(73) Patentinhaber: Bayerische Motoren Werke Aktiengesellschaft, 80788 München (DE)
(72) Erfinder: Langen, Peter, D-80935 München (DE); Scholten, Joachim, Dr., D-86276 Pfaffenhofen (DE)

(56) Entgegenhaltungen:
- EP-A- 0 323 413
- PATENT ABSTRACTS OF JAPAN vol. 10 no. 299 (M-524) [2355] ,11.Oktober 1986 & JP-A-61 112773 (MAZDA) 30.Mai 1986,

## Beschreibung

Die Erfindung betrifft eine Vorrichtung gemäß ersten Teil des Anspruchs 1.
Insbesondere Brennkraftmaschinen zum Antrieb von Kraftfahrzeugen sollen in einigen Fällen mit verschiedenartigen Kraftstoffen betrieben werden können, so beispielsweise mit Benzin und mit Erdgas. Die Ansaugsysteme derartiger bekannter, gemischverdichtender Brennkraftmaschinen weisen üblicherweise zwei Kraftstoffzufuhr-Vorrichtungen auf. Dabei mündet im Ansaugkanal (bei einer mehrzylindrigen Brennkraftmaschine ggf. zylinderindividuell) ein Kraftstoff-Einspritzventil für Flüssigkraftstoff, daneben ist eine weitere Zufuhrvorrichtung (ggf. ebenfalls zylinderindividuell) für den gasförmigen Kraftstoff vorgesehen. Diese Lösung bedingt jedoch einen hohen Bauaufwand und stellt darüber hinaus besondere Anforderungen an die konstruktive Gestaltung des Ansaugkanales bzw. Ansaugsystemes, da insbesondere bei mehrzylindrigen Brennkraftmaschinen eine Vielzahl von Kraftstoff-Zufuhrorganen unterzubringen sind.

Eine demgegenüber einfachere Kraftstoffzufuhr-Vorrichtung für eine gemischverdichtende, wahlweise mit Flüssigkraftstoff oder gasförmigem Kraftstoff betreibbare Brennkraftmaschine aufzuzeigen, ist Aufgabe der vorliegenden Erfindung.
Zur Lösung dieser Aufgabe ist vorgesehen, daß ein bekanntes luftumfaßtes Einspritzventil für Flüssigkraftstoff, das diesem über eine Luftleitung herangeführte Verbrennungsluft beimengt, zum Einsatz kommt, und daß bei Betrieb mit gasförmigem Kraftstoff diese Luftleitung den zuvor ein Dosierorgan durchströmenden gasförmigen Kraftstoff zum bezüglich des Flüssigkraftstoffes stillgesetzten Einspritzventil heranführt. Bevorzugt weist die Luftleitung ein Umschaltventil zur wahlweisen Zufuhr von Verbrennungsluft oder von gasförmigem Kraftstoff auf.

Ein sog. luftumfaßtes Einspritzventil ist beispielsweise aus der DE 41 29 834 A1 bekannt. Dieses luftumfaßte Einspritzventil unterscheidet sich von den einfachen, alleinig Kraftstoff in einen Ansaugkanal einer Brennkraftmaschine einspritzenden Einspritzventilen durch einen der Abspritzöffnung nachgeschalteten beliebig gestalteten Raum, in den zusätzliche Verbrennungsluft einströmen kann. In diesen Raum kann die Verbrennungsluft dabei kontinuierlich einströmen, während das Abspritzen von Flüssigkraftstoff wie üblich lediglich diskret, d. h. bei einer entsprechenden Ansteuerung des Einspritzventiles erfolgt. Für die kontinuierliche Zufuhr der Verbrennungsluft ist eine Luftleitung vorgesehen, die mit einer geeigneten Abzweigstelle des Ansaugsystemes der Brennkraftmaschine verbunden ist. Mit diesen bekannten luftumfaßten Einspritzventilen ergibt sich für gemischverdichtende, mit Flüssigkraftstoff betriebene Brennkraftmaschinen eine verbesserte Gemischaufbereitung bereits im Ansaugkanal.

Erfindungsgemäß kommt nun bei einer gemischverdichtenden Brennkraftmaschine, die wahlweise mit Flüssigkraftstoff oder mit gasförmigem Kraftstoff betreibbar sein soll, ein derartiges bekanntes, luftumfaßtes Einspritzventil zum Einsatz. Dabei wird der gasförmige Kraftstoff dann, wenn dieses Einspritzventil bezüglich der Zufuhr von Flüssigkraftstoff stillgesetzt ist, über die Luftleitung zugeführt, über die bei Betrieb mit Flüssigkraftstoff die (zusätzliche) Verbrennungsluft herangelangt. Da wie erläutert das Einspritzventil jedoch keine Dosierung der zusätzlich herangeführten Verbrennungsluft und somit auch keine Dosierung des über diese separate Luftleitung herangeführten gasförmigen Kraftstoffes ermöglicht, ist an einer geeigneten Stelle der Luftleitung ein Dosierorgan für den gasförmigen Kraftstoff vorgesehen. Vorzugsweise sitzt dieses Dosierorgan stromauf eines Umschaltventiles, mit Hilfe dessen die Luftleitung wahlweise mit dem gasförmigen Kraftstoff oder mit der zusätzlichen Verbrennungsluft versorgt werden kann.

Mit dieser Anordnung wird kein weiteres separates Zufuhrorgan für den gasförmigen Kraftstoff benötigt. Vielmehr kann mit Hilfe eines für den Flüssigkraftstoff vorgesehenen Einspritzventiles in eleganter Weise alternativ kontinuierlich gasförmiger Kraftstoff zugeführt werden. Vorteilhafterweise stellt sich bei Betrieb mit Flüssigkraftstoff aufgrund der zusätzlichen Verbrennungsluftzufuhr im Bereich des Einspritzventiles auch eine verbesserte Gemischaufbereitung ein. Dies sowie weitere Vorteile der Erfindung wird auch aus der folgenden Beschreibung eines lediglich prinzipiell dargestellten bevorzugten Ausführungsbeispieles ersichtlich.

Mit der Bezugsziffer 1 ist vierzylindrige gemischverdichtende Brennkraftmaschine bezeichnet, deren Abgasanlage schematisch unter der Bezugsziffer 2 dargestellt und deren Ansaugsystem mit der Bezugsziffer 3 bezeichnet ist. Jedem Zylinder ist dabei ein separater Ansaugkanal 4 zugeordnet, in den jeweils ein Kraftstoff-Einspritzventil 5 mündet.

Die Einspritzventile 5 werden über eine Kraftstoffleitung 6 mit Flüssigkraftstoff versorgt, dabei ist in dieser Kraftstoffleitung 6 wie üblich ein Druckregler 7 vorgesehen. An jedem Kraftstoff-Einspritzventil 5 mündet ferner eine Luftleitung 8, wobei die Luftleitungen 8 der einzelnen Einspritzventile 5 zu einer gemeinsamen Luftleitung 8 zusammengeführt sind. In dieser gemeinsamen Luftleitung 8 ist ein Umschaltventil 9 vorgesehen, über das über eine erste Leitung 10a entweder Verbrennungsluft oder über eine zweite Leitung 10b gasförmiger Kraftstoff in die Luftleitung 8 eingespeist werden kann. In der zweiten Leitung 10b ist ein Dosierorgan 11 vorgesehen, mit Hilfe dessen letztendlich die Menge des über das Umschaltventil 9 in die Luftleitung 8 eingeleiteten gasförmigen Kraftstoffes eingestellt werden kann.

Das Dosierorgan 11, das Umschaltventil 9, sowie die Einspritzventile 5 sind elektrisch mit einem Steuergerät 12 verbunden, welches entsprechende Schalt- oder Stellimpulse zu diesen einzelnen Bauelementen 5, 9, 11 leitet. Soll die Brennkraftmaschine 1 mit Flüssigkraftstoff betrieben werden, so wird das Umschaltventil 9 derart angesteuert, daß zusätzliche Verbrennungsluft in die Luftleitung 8 gelangen kann. Gleichzeitig werden die Kraftstoff-Einspritzventile 5 für den Betrieb mit Flüssigkraftstoff angesteuert, d. h. wie üblich geben die Einspritzventile 5 über eine gewisse Zeitspanne Flüssigkraftstoff in den jeweiligen Ansaugkanal 4 ab. Dabei wird über diese luftumfaßten Einspritzventile kontinuierlich ebenfalls zusätzliche Verbrennungsluft, die über die Luftleitung 8 herangeführt wird, in den Ansaugkanal eingeleitet, was wie bekannt eine verbesserte Gemischaufbereitung bewirkt.

Soll hingegen die Brennkraftmaschine 1 mit gasförmigem Kraftstoff betrieben werden, so werden durch das Steuergerät 12 die Einspritzventile 5 bezüglich der Zufuhr von Flüssigkraftstoff stillgesetzt, d. h. bezüglich des Flüssigkraftstoffes bleiben diese Einspritzventile 5 geschlossen. Das Umschaltventil 9 wird dann in eine derartige Position gebracht, daß die Luftleitung 8 mit der zweiten Leitung 10b verbunden ist, über die der gasförmige Kraftstoff in die Luftleitung 8 und von da aus zu den Einspritzventilen 5 gelangen kann. Die Menge des über die zweite Leitung 10b zugeführten Kraftstoff-Gasstromes wird dabei durch das Dosierorgan 11 bestimmt. Über die auch der Einspritzung von Flüssigkraftstoff dienenden Einspritzventile 5 kann nunmehr der gasförmige Kraftstoff in die Ansaugkanäle 4 der mehrzylindrigen Brennkraftmaschine 1 gelangen. Hierbei ist - wie dies bei der Verwendung von gasförmigem Kraftstoff üblich und bekannt ist - eine kontinuierliche Kraftstoffzufuhr durchaus ausreichend.

Indem je Ansaugkanal lediglich ein einziges Einspritzventil 5 erforderlich ist, um alternativ Flüssigkraftstoff oder gasförmigen Kraftstoff zuzuführen, ergibt sich ein äußerst geringer Bauaufwand, wodurch ebenfalls die Störanfälligkeit reduziert wird. Vorteilhafterweise können dabei bekannte und bewährte Bauelemente zum Einsatz kommen.

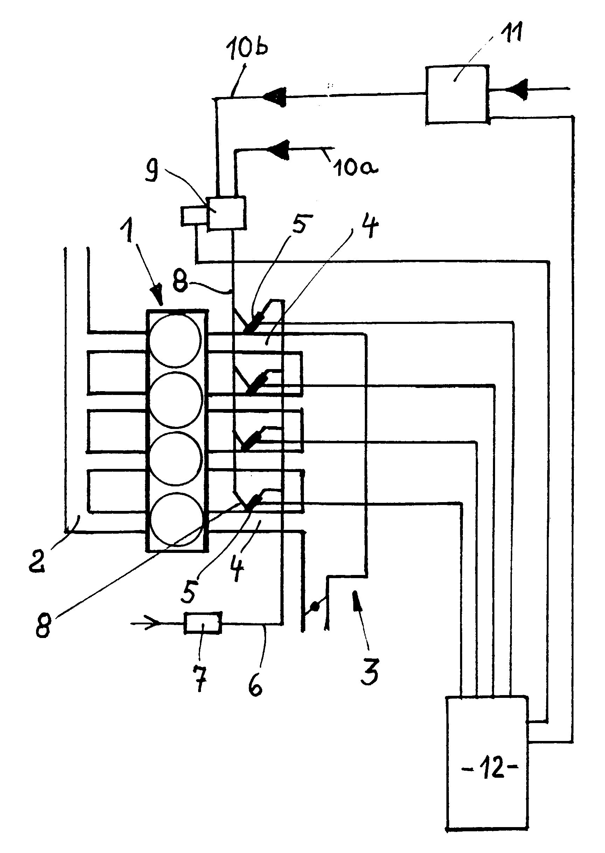

## Patentansprüche

1. Vorrichtung zur Kraftstoffzufuhr, die wahlweise mit Flüssigkraftstoff oder gasförmigem Kraftstoff betreibbar ist, für eine gemischverdichtende Brennkraftmaschine (1), mit zumindest einem in einem Ansaugkanal (4) mündenden Kraftstoff-Einspritzventil (5), dadurch gekennzeichnet, daß ein bekanntes luftumfaßtes Einspritzventil (5) für Flüssigkraftstoff, das diesem über eine Luftleitung (8) herangeführte Verbrennungsluft beimengt, zum Einsatz kommt, und daß bei Betrieb mit gasförmigem Kraftstoff diese Luftleitung (8) den zuvor ein Dosierorgan (11) durchströmenden gasförmigen Kraftstoff zum bezüglich des Flüssigkraftstoffes stillgesetzten Einspritzventil (5) heranführt.

2. Kraftstoffzufuhr-Vorrichtung nach Anspruch 1, dadurch gekennzeichnet, daß die Luftleitung (8) ein Umschaltventil (9) zur wahlweisen Zufuhr von Verbrennungsluft oder von gasförmigem Kraftstoff aufweist.

## Claims

1. A device for supplying fuel and operating with liquid fuel or gaseous fuel as required, for a gas engine (1) and comprising at least one fuel injection valve (5) opening into an induction port (4),
characterised in that a known air-enveloped injection valve (5) for liquid fuel is used and mixes the fuel with combustion air supplied through a pipe (8), and during operation with gaseous fuel the air pipe (8) supplies gaseous fuel, flowing through a metering means (11), to the injection valve (5), which has been made inoperative with regard to liquid fuel.

2. A fuel supply device according to claim 1, characterised in that the air pipe (8) contains a change-over valve (9) for supplying combustion air or gaseous fuel as required.

## Revendications

1. Dispositif pour l'alimentation en carburant d'un moteur à combustion interne, au choix par du carburant liquide ou gazeux avec au moins un injecteur de carburant aboutissant dans un canal d'aspiration,
caractérisé par
un injecteur à balayage d'air (5) connu pour carburant liquide qui lui associe de l'air comburant par une conduite d'air (8) et, pour utiliser du carburant gazeux, cette conduite d'air (8) amène le carburant gazeux traversant précédemment un organe de dosage (11) à l'injecteur (5) fermé pour le carburant liquide.

2. Dispositif pour l'alimentation en carburant d'un moteur à combustion interne,
caractérisé en ce que
la conduite d'air (8) est équipée d'une soupape de commutation (9) pour le choix de l'alimentation en air comburant ou en carburant gazeux.
